# EUROPEAN PATENT APPLICATION

(11) **EP 1 237 373 A2**
(43) Date of publication of application: **04.09.2002**
(21) Application number: 01128317.3
(22) Date of filing: 29.11.2001
(51) Int. Cl.: H04N 7/18, G06F 17/30

(54) **An electronic news gathering system, a method of electronic news gathering, a method of fabricating an apparatus for facilitating electronic news gathering and an electronic news audio and video coverage system**

(30) Priority: 15.02.2001 US 784496
(71) Applicant: Xybernaut Corporation, Fairfax, Virginia 22033 (US)
(72) Inventor: Inasaka, Rei, Chigasaki, Kanagawa 283-0052 (JP)
(74) Representative: Borchert, Uwe Rudolf, Dipl.-Ing.

(57) **Abstract**

The present invention is essentially a method of gathering live video and audio coverage, otherwise known as electronic news gathering (ECN) which is based on the use of a single person employing a wearable computer.

A hands-free user-supported computer with an attached video camera and microphone and wireless communication capability facilitates capture and upload of live video which when routed through an HTTP server can be made available for end-users on the Internet.

## Description

The present invention relates to an electronic news gathering system according to the features of claim 1, to a method of electronic news gathering according to the features of claim 2, a method of fabricating an apparatus for facilitating electronic news gathering according to the features of claim 3 and an electronic news audio and video coverage system according to the features of claim 4.

The invention is essentially a method of gathering live or delayed video broadcasts which utilizes a wearable computer and wireless communications link. Specifically, it relates to a method of obtaining, providing, and delivering news coverage using only a single person equipped with a video camera-equipped hands free wearable computer and wireless communications link.

The rapid growth of the Internet in recent years has caused media companies to jump on the bandwagon and claim a stake for themselves on the Internet. Evidence that supports the Internet's status as a mainstream medium for advertising, delivering news and weather, entertainment and even live and delayed video broadcasts can be found nearly everywhere. Newspapers, television networks, and even radio stations have all created a web presence and use this as to broaden their exposure to the consumer of content. With the creation of Real Networks Real Player® client and other video player clients, and significant advances in digital video capturing and transmission, it is now possible to record live coverage, digitize it, and put it on the web for selective or live viewing. The problem remains, however, in providing efficient, cost effective mobile gathering of video coverage.

Currently, there are two typical methods of providing video coverage to the web.

In one method, there are what are known as web cams which are fixed cameras that deliver a slightly delayed view of something to the web as a continuous feed. Viewers can tap into it at any time of day or night, as long as the broadcast is still on. These cameras are usually either fixed or provide a rotating time changing perspective about their fixed position. These are fairly inexpensive to implement but are very limited in that they can not be used to follow something around because of their fixed nature.

Another alternative is to physically send out a news crew to cover a location or perform an interview, then take the film coverage, digitize it, and upload it to a data server so that it can be accessed by viewers. This is expensive because of the crew and equipment involved and sometimes logistically impossible because of traffic and/or congestion or even the location of the event to be covered.

The problem with these two solutions stems from the fact that coverage does not always occur at the same location. On a daily basis, and in fact several times a day, news crews are dispatched to conduct on the spot interviews and to provide coverage of traffic, accidents, and other unexpected events as they occur. These events may or may not permit a news crew to easily cover them depending upon traffic conditions and the actual location of the event to be covered. Furthermore, a mobile news crew is a significant capital investment for a television station so there are finite limits on the number of crews and supporting equipment available and subsequently on the number of events for which news coverage can be provided in a given day.

Thus, there exists a need for an integrated system which is capable of capturing and delivering live coverage of events or other activities which are typically covered by the news media, and delivering it in real or near real time or even on a demand basis to viewers on the Internet.

It is, therefore, an object of this invention to provide a novel system for capturing live video.

Another object of this invention is to provide a system which allows a single person to conduct interviews, record live video, and to deliver the video to a remote location.

Yet another object of this invention is to provide a system which allows live or nearly live content to be delivered to viewers who are connected to the Internet.

An additional object of this invention is to provide a system which will facilitate gathering of news in areas where it is not physically feasible to insert entire news crew and satellite or antenna up-link truck.

These and additional objects of this invention are accomplished generally speaking by a method gathering, reporting, recording, and transmitting video of live events utilizing a wearable computer with integral video camera and a wireless data network.

Additional advantages and characteristics result from the following description of an exemplary embodiment of the invention in connection with the drawing. In the drawing is shown:

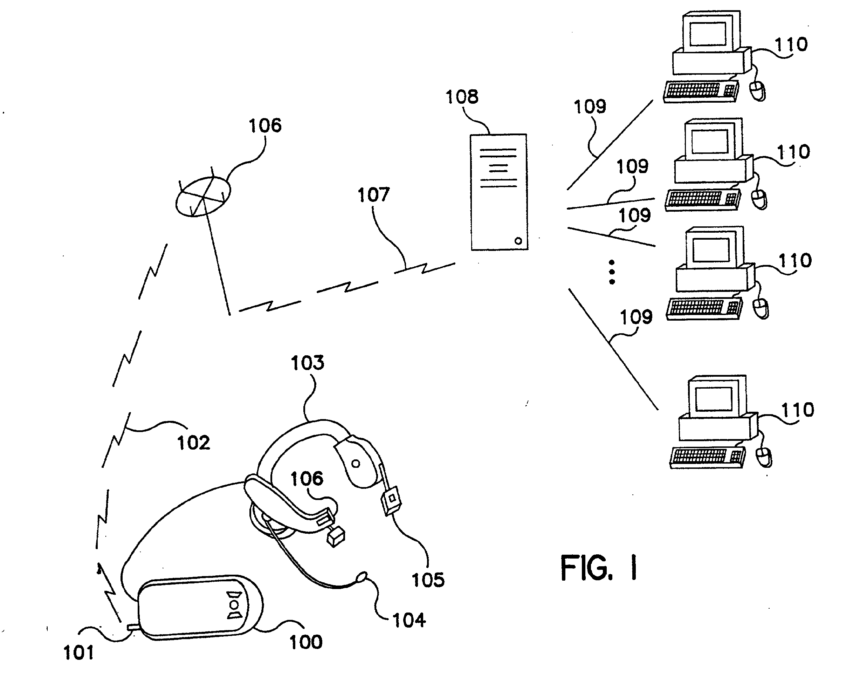

- Fig. 1: illustrates in the exemplary embodiment the basic system components of the present invention.

The invention is at its essence a method of remotely acquiring and then delivering audio and video media content to viewers on the web. It allows a single person wearing a computer with integral camera and wireless modem, wireless LAN card, or other wireless transmission means to capture video and audio coverage which can be uploaded to a server and available for delayed and/or live download by those who are interested and have access to a computer connected to the Internet.

For the purposes of this disclosure and claims, the term wearable computer or user supported computer will be taken to mean a computer of the type disclosed in U.S. patents 5,305,244 and 5,844,824 assigned to Xybernaut Corporation of Fairfax, VA, USA, and successfully commercialized under the trade name Mobile Assistant® hereby incorporated by reference, or it will be a wearable or user-supported computer manufactured by another company. The computer will be worn on the body of the person recording the coverage.

The computer will be comprised at least of essential components notoriously well known in the art, including a CPU, memory, storage, I/O, activation means, audio input and output, and other standard computer components. It will also have a display device such as a head mounted display. Alternatively, the display device could be a neck hung display, a hand-held or wrist-mounted flat panel display, or other suitable portable display device which can be reasonably supported by the body of a user. There will also be an attached or integral microphone.

In this manner, audio concurrent to video can be recorded. The microphone can also support command and control or even continuous speech recognition so the user can operate the computer in a substantially hands free manner.

The computer will also have an attached video camera capable of recording live video. The camera may be attached to the head mounted display, worn elsewhere on the body of the operator or carried. Preferably, the camera will be attached so as to free the user's hands and will possess a gimbal or other device for maintaining a steady and level picture.

Alternatively, it will utilize picture stability enhancing hardware and/or software. Also, the display should display the same picture being recorded by the camera in at least one window on the display screen so that the operator can receive visual feedback of what is being recorded while he is recording. This is akin to looking through the view finder on a camcorder while recording except for the fact that the head mounted display does not occlude the wearer's field of vision so that he can still see where he is walking and going, but can selectively look at the screen of the display to ensure that he is recording the desired footage.

Reference will now be made specifically to Fig. 1 which illustrates an exemplary embodiment of the present invention.

A wearable or user-supported computer 100 is attached to a head mounted display 103. Alternatively, the display 103 could be a flat panel display, neck hung display, or other suitable user-supported display. The display 103 possesses a display screen 106 which displays output from the computer 100. The display 103 also possesses a microphone 104 and a video camera 105. Alternatively, the-microphone could be a handheld or other user-supported microphone. Using the microphone 104, video camera 105 and computer 100, a user is able to record live video and audio. Attached to the computer 100 is a communications card and antenna for sending a signal, representative of captured video and audio using a wireless transmission protocol 102.

Alternatively, the coverage could be buffered or stored locally on the computer 100 and uploaded through a hardwire connection.

Once the signal 102 is received at the wireless receiving station 106 it can be transmitted via land-line communication 107 to the server computer 108 belonging to the entity recording the coverage. At the server 108, the video and audio stream is converted into a format which allows it to be viewed over the Internet 109 by users of personal computers 110. This coverage can be broadcast live or on a time delayed basis or it can be available on demand for download over the Internet 109 to users of personal computers 110.

The system of the present invention will be best illustrated by example. In one application, a reporter goes to an event. For instance, it could be spring training camp for a baseball team. Wearing his computer he is able to interview ball players or merely watch their fielding or batting practice and record the interview with the camera attached to his wearable computer while maintaining his hands free to do other tasks. Using a communication means either integral to the computer, attached to a port on the computer or in communication with the computer, he can then transmit the video/audio stream using this communication means as long as he is within the physical influence of a wireless network. This information will then be fed to a server and available for live download, such as in a web cam embodiment, or available on a pull basis at the viewer's convenience.

In another example, the system could be used to afford coverage of an event where it would otherwise be difficult to insert a news crew and truck such as the scene of an automobile accident or traffic jam. In crowded cities around the world, it is often difficult or even impossible to get a news crew to the scene of an accident or bottleneck because of the volume of traffic and automobiles in the surrounding area. In this embodiment the camera and computer can be mounted on a bicycle or motorized bike or worn by the operator of the bike, which could more easily navigate through stopped traffic. Once the operator arrives at the scene, or even as he approaches, he can begin to record live footage of the scene which can be relayed back to the central data server of the news station or organization sponsoring him. This will greatly reduce the time involved in getting news crews to the scene and will provide the ability to get into highly congested areas without having to send out an up-link truck and news crew to record footage.

One of ordinary skill in the art can imagine various other exemplary uses for this method of capturing and delivering video and audio content which is based upon a wearable computer platform which while similar in function do not depart in spirit or in scope from the present invention.

### List of Reference Signs

- 100: computer
- 101: antenna
- 102: transmission protocol
- 103: display
- 104: microphone
- 105: video camera
- 106: display screen / receiving station
- 107: land-line communication
- 108: server computer
- 109: Internet
- 110: personal computer

## Claims

1. An electronic news gathering system, wherein news comprises audio and video coverage, the system comprising:
a wearable computer, containing all the essential elements of a computer;
a body supported display device communicating with said computer and providing an interface for a user to said computer;
a body supported video camera communicating with said computer and said display for capturing video coverage, said video camera capable of essentially hands-free operation once activated, said video camera further providing video feedback to at least one display window on said display device;
a microphone synchronized with said video camera for capturing audio simultaneous to video captured by said video camera;
a communication means communicating with said computer for transmitting audio and video coverage captured by said microphone and said camera;
a server computer capable of receiving signals representative of captured audio and video and converting said signals into a format which can be viewed on a personal computer possessing a video and audio capable client by persons connected to the Internet.

2. A method of fabricating an apparatus for facilitating electronic news gathering wherein news comprises video and audio footage, the method comprising the steps of:
attaching a display device to a user-supported computer;
attaching a video camera to a user-supported computer,
attaching an audio recording means to one of said computer or said camera wherein said audio means is capable of recording audio synchronized with said video;
attaching a communications means to said user-supported computer, said communication means capable of wireless transmission of signals representative of video and audio coverage to a server computer, said server computer connected to the world wide web and further capable of converting said signals into a format which can be viewed and listened to on personal computers connected to the world wide web.

3. A method of electronic news gathering using a user-supported computer wherein news includes audio and video coverage, the method comprising the steps of:
supporting a user-supported computer on the body of a person, wherein said computer possesses a body-worn video recording means and a body worn audio recording means;
recording audio and video coverage utilizing said computer, said video recording means and said audio recording means;
displaying, in at least one window, on a body-worn display device in communication with said computer and said video recording means, video feedback from said video recording means;
wirelessly transmitting signals representative of recorded audio and video using a communications means integral or attached to said computer to a server computer;
converting, at said server computer, said signals into a format which can be downloaded and displayed by personal computers over the world wide web.

4. An electronic news audio and video coverage system comprising in combination:
a user supported computer,
a user supported display,
means for said computer to communicate with said display,
a user supported hands-free video camera in communication with said display and said computer,
means for said camera to provide video feedback to said display,
a microphone in communication with said video camera for capturing audio signals substantially simultaneous to signals captured by said video camera,
communication means in communication to said audio and video coverage captured by said microphone and said video camera,
and means for converting said signals to a format which can be viewed on a personal computer.

5. The system according to claim 4, **characterized in that** said means for converting said signals is a server computer.

6. The system according to claim 4 or 5, **characterized in that** said format is an Internet system.

7. The system according to any one of claims 4 to 6, **characterized in that** said computer, display and video camera are all user supported and have means for hands-free operation.

8. The system according to any one of the claims 4 to 7, **characterized in that** said video camera has means for further providing video feedback to at least one display window on said display device.

9. The system according to any one of claims 4 to 8, **characterized in that** said microphone is synchronized with said video camera and said system has means for capturing audio substantially simultaneous to video captured by said video camera.
